# EUROPÄISCHE PATENTSCHRIFT

(11) **EP 1 913 782 B1**
(45) Veröffentlichungstag und Bekanntmachung des Hinweises auf die Patenterteilung: **16.12.2009**
(21) Anmeldenummer: 06775728.6
(22) Anmeldetag: 22.07.2006
(51) Int. Cl.: H04W 4/02

(54) **VERFAHREN UND SYSTEM ZUR NUTZUNG VON ORTSBASIERTEN DIENSTEN FÜR MOBILE ENDGERÄTE**
METHOD AND SYSTEM FOR USING LOCALLY BASED SERVICES FOR MOBILE TERMINALS
PROCEDE ET SYSTEME POUR EXPLOITER DES SERVICES A SITE FIXE POUR TERMINAUX MOBILES

(30) Priorität: 28.07.2005 DE 102005035287
(43) Veröffentlichungstag der Anmeldung: 23.04.2008
(73) Patentinhaber: Deutsche Telekom AG, 53113 Bonn (DE)
(72) Erfinder: HASEMANN, Jörg-Michael, 27321 Emtinghausen (DE)
(86) Internationale Anmeldenummer: PCT/DE2006/001271
(87) Internationale Veröffentlichungsnummer: WO 2007/012310

(56) Entgegenhaltungen:
- WO-A-97/41654
- WO-A-98/21913
- WO-A-2005/015926
- US-A1- 2003 036 379
- "Digital cellular telecommunications system (Phase 2+)" ETSI STANDARDS, EUROPEAN TELECOMMUNICATIONS STANDARDS INSTITUTE, SOPHIA-ANTIPO, FR, Bd. 3-SA1, Nr. V600, Januar 2005 (2005-01), XP014027409 ISSN: 0000-0001

## Beschreibung

Die vorliegende Erfindung betrifft ein Verfahren sowie ein System zur Nutzung von ortsbasierten Diensten für mobile Endgeräte eines Mobilfunknetzes, wobei über das mobile Endgerät eine Informationsanfrage nach einer auf den Aufenthaltsort des Nutzeres abgestimmten Informationen abgesetzt wird.

Unter einem ortsbasierten Dienst (location based service - LBS) wird ein ortsgebundener Service eines Mobilfunkanbieters verstanden, der auf den Aufenthaltsort des Nutzers abgestimmte Informationen liefert. Hierbei ist der Aufenthaltsort des Nutzers mit dem Aufenthaltsort seines mobilen Endgeräts identisch. Gewöhnlich stellen Mobilfunkanbieter mit dem Anruf die aktuelle Position des mobilen Endgeräts bereit. Die Position ist dabei durch die Funkzelle gegeben, in der sich das mobile Endgerät angemeldet hat. Jede Funkzelle verfügt über eine eindeutige Identifikationsnummer, wodurch eine grobe Ortung des Endgeräts möglich ist. Die zur Verfügung gestellte Ortungsgenauigkeit hängt von der Funkzellengröße ab und liegt beim Mobilfunkstandard GSM im städtischen Bereich bei ca. 100 Metern. Im Rahmen der vorliegenden Erfindung kann der Aufenthaltsort des Nutzers aber auch über ein im mobilen Endgerät integriertes GPS-Modul bestimmt werden. Die Palette allgemein bekannter ortsbasierter Dienste kann in Unternehmen, im Dienstleistungsbereich und im Privaten genutzt werden. Beispielsweise kann die Information über einen dem mobilen Endgerät nächstgelegenen Geldautomaten Gegenstand eines privaten ortsbasierten Dienstes sein.

Gemäß des allgemeinen Standes der Technik erfolgt die Nutzung ortsbasierter Dienste meist über einen SMS-Dialog zwischen dem Nutzer und dem Dienstanbieter. Alternativ hierzu ist auch eine Nutzung per Web-/WAP-Dialog möglich. Im erstgenannten Fall sendet der Nutzer über das mobile Endgerät beispielsweise eine SMS (Short Message Service) mit der Nachricht "Geld" an eine Servicerufnummer und erhält per SMS eine Liste der nächstgelegenen Geldautomaten. Diese Art der Benutzung ist jedoch recht umständlich und langwierig. In bestimmten Nutzungssituationen, wie beispielsweise hinter dem Steuerrad eines Kraftfahrzeuges, ist eine derartige Benutzung überhaupt nicht möglich.

Aus der US 2003/0036379 A1 geht ein Verfahren sowie ein System zur Nutzung von ortsbasierten Diensten für mobile Endgeräte hervor, welches das vorstehend angegebene Problem dadurch löst, indem das Mobilfunknetz stets eine Information über verfügbare ortsbasierte Dienste im aktuellen Aufenthaltsgebiet des Endgeräts übermittelt. Hierzu wird vom Mobilfunknetz ein Indikatorsignal an das mobile Endgerät ausgestrahlt, welches entsprechend den verfügbaren ortsbasierten Diensten Symbole (Piktogramme) auf der Anzeige des mobilen Endgeräts darstellt. Durch die Gestaltung der Symbole ist die Art des angebotenen ortsbasierten Dienstes erkennbar. Der Nutzer hat nun die Möglichkeit, eine Auswahl über ihn interessierende ortsbasierte Dienste, die aktuell zur Verfügung stehen, zu treffen, um diese zu nutzen. Nachteilig bei dieser Lösung ist jedoch, dass eine genaue Unterscheidbarkeit zwischen angebotenen ortsbasierten Dienste schwer möglich ist, falls sehr viele ortsbasierte Dienste unterschiedlichen Inhalts über die Symboldarstellung angeboten werden. Darüber hinaus beschränkt die Größe der Anzeige des mobilen Endgeräts die Anzahl der auf einen Blick darstellbaren verfügbaren ortsbasierten Dienste. WO 981/21913 beschreibt ein Verfahren zur Nutzung von ortsbasierten Diensten für mobile Endgeräte, die eine Informationsanfrage als ein USSD-Code absetzen und als Antwort die hierzu passende ortsbasierte Information an den Nutzer wiederum per USSD versendet wird. Alternativ kann SMS für beide Richtungen genutzt werden.

Es ist daher die Aufgabe der vorliegenden Erfindung, ein Verfahren und ein System zur Nutzung von ortsbasierten Diensten für mobile Endgerät zu schaffen, welches sich gerätetechnisch mit minimalem Aufwand umsetzen lässt und eine einfache Nutzung ortsbasierter Dienste gestattet.

Die Aufgabe wird ausgehend von einem Verfahren gemäß dem Oberbegriff von Anspruch 1 in Verbindung mit dessen kennzeichnenden Merkmalen gelöst. Systemtechnisch wird die Aufgabe durch Anspruch 3 gelöst. Die jeweils rückbezogenen abhängigen Ansprüche geben vorteilhafte Weiterbildungen der Erfindung wieder.

Die Erfindung schließt die verfahrenstechnische Lehre ein, dass die Informationsanfrage als ein USSD-Code (Unstructed Supplementary Service Data) abgesetzt wird, der eine Klasse von im Mobilfunknetz definierten USSD-Codes für ortsbasierte Dienste angehört, so dass durch einen USSD-Handler des Netzwerkbetreibers der eingehende USSD-Code für ortsbasierte Dienste identifiziert und gemeinsam mit der Adresse des abgefragten Nutzers an eine LSB-Weiterverarbeitungsinstanz weitergeleitet wird, durch welche der USSD-Code für ortsbasierte Dienste anhand seiner Parametrierung interpretiert wird und die dazu passende ortsbasierte Information zum Versenden an den Nutzer bereitgestellt wird.

Der Vorteil der erfindungsgemäßen Lösung resultiert insbesondere daraus, dass fast alle auf dem Markt befindlichen GSM/GPRS/UMTS-Endgeräte den USSD-Standard unterstützen, so dass sich die erfindungsgemäße Lösung gerätetechnisch besonders einfach umsetzen lässt. Es ist keine hardware- und softwaremäßige Änderung am mobilen Endgerät erforderlich sowie an dessen Profilen oder SIM-Karte. Da dem Nutzer lediglich bekannt sein muss, welcher USSD-Code für welchen ortsbasierten Dienst steht, ist die Nutzung denkbar einfach. Darüber hinaus ist die Verarbeitung von USSD-Codes im Mobilfunknetz vielfach schneller als die Verarbeitung von SMS-Nachrichten. Somit erhält der Nutzer sehr schnell die von ihm angefragte Information. Da ein USSD-Code standardgemäß eine Authentifizierung des Nutzers/mobilen Endgeräts mit beinhaltet, sind für die Nutzung von ortsbasierten Diensten auf dem erfindungsgemäßen Wege weitere Authentifizierungsmaßnahmen nicht erforderlich. Da über USSD-Codes die Inhalte verschlüsselt übertragen werden, ist die erfindungsgemäße Lösung auch sicher vor unberechtigten Zugriffen Dritter. Darüber hinaus ist USSD-Infrastruktur bei Netzwerkbetreibern weitestgehend vorhanden; beispielsweise ist hiermit eine Anrufweiterschaltung (**21*Zielrufnummer*#) möglich.

Vorzugsweise wird die abgefragte ortsbasierte Information dem Nutzer graphisch aufbereitet via SMS/MMS übersendet. Daneben ist es jedoch auch möglich, die abgefragte ortsbasierte Information akustisch aufzubereiten und per Sprachanruf an die Adresse des Nutzers zu versenden. Dieser kann dann mit einem Anruf die gewünschte Information abhören. Über die Syntax des USSD-Codes ist es hierbei möglich, dass der Benutzer auswählt, ob er die abgefragte Information graphisch oder akustisch oder sonst wie erhalten möchte. Zur Auswahl der graphischen oder akustischen Aufbereitung der abgefragten ortsbasierten Information für den Nutzer erhält der USSD-Code vorteilhafterweise mindestens einen entsprechenden, vom Nutzer wählbaren Parameter.

Daneben ist es auch denkbar, dass auf dem vorstehend erläuterten Wege der Nutzer auswählen kann, ob er die abgefragte ortsbasierte Information einmalig oder mehrmalig empfangen möchte. Dies macht insbesondere dann Sinn, wenn der Nutzer des mobilen Endgeräts nicht eine Anrufbeantworter-Funktion zur Speicherung eigener Sprachanrufe aktiviert hat und die abgefragte ortsbasierte Information akustisch empfangen werden soll.

Gemäß einer weiteren die Erfindung verbessernden Maßnahme wird vorgeschlagen, dass als Adresse des abfragenden Nutzers die MSISDN (Mobile Subscriber Number) des mobilen Endgeräts genutzt wird, worüber der aktuelle Aufenthaltsort des mobilen Endgeräts ermittelt wird. Dieser ist in der MSISDN verschlüsselt, so dass keine weiteren Maßnahmen zu einer Ermittlung des aktuellen Aufenthaltsorts für die Datenverarbeitung erforderlich ist.

Systemtechnisch lässt sich das erfindungsgemäße Verfahren über die allgemein bekannte USSD-Infrastruktur eines Mobilfunknetzes umsetzen. Bei dem USSD-Standard handelt es sich um einen eigens für GSM entwickelten Übermittlungsdienst, der andere als die durch GSM-Signalisierung implementierten Zusatzdienste unterstützt und eine besonders einfache Nutzung derselben ermöglicht. Die Zugangsnummern für Dienste, welche auf USSD-Standard basieren, haben ein Datenformat, bei welchem die Stern- und Rautentaste auf dem mobilen Endgerät genutzt werden. Über den USSD-Standard ist es somit möglich, den Zugang zu vorkonfigurierten betreiberspezifischen Diensten zu erhalten, wie auch der erfindungsgemäßen Lösung. Für die Erbringung des erfindungsgemäßen ortsbasierten Dienstes unter Nutzung des USSD-Standards sind von den Netzwerkbetreibern eigene Adressierungsressourcen zu verwenden, welche nicht von den nationalen Regulierungsstellen kontrolliert oder verwaltet werden. Lediglich der USSD-Handler des Netzwerkbetreibers ist an die Datenverarbeitung zum Zwecke der Filterung eingehender USSD-Codes für ortsbasierte Dienste (LBS-USSD) anzupassen. Es ist eine LBS-Weiterverarbeitungsinstanz (WVI) vorgesehen, welche den für einen ortsbasierten Dienst stehenden USSD-Code entsprechend seiner Parametrierung interpretiert und die hierzu passenden ortsbasierten Informationen zum Versenden an den Nutzer bereitstellt.

Vorteilhafterweise ist der erfindungsgegenständliche USSD-Handler des Netzwerkbetreibers in eine Mobilfunkvermittlungsstelle (MSC) ein Besucherverzeichnis (VLR) oder ein Standortverzeichnis (HLR) des nach dem GSM/3GPP-Standard aufgebauten Mobilfunknetzes integriert. Die vorgenannten Systemkomponenten sind in der Mobilfunktechnik allgemein bekannt. Die Mobilfunkvermittlungsstelle (MSC) ist ein intelligentes Vermittlungssystem in GSM-Netzen. Das Vermittlungssystem stellt die Verbindung zwischen den mobilen Endgeräten her. Zu diesem Zweck schaltet die Mobilfunkvermittlungsstelle zuerst eine Verbindung zur Basisstation und von dort aus wird der Funkkontakt zum anderen mobilen Endgerät hergestellt. Eine Mobilfunkvermittlungsstelle besitzt mehrere Datenbanken, in denen Benutzerdaten im Standortverzeichnis (HLR) und Daten von Besuchern im Besucherverzeichnis (VLR) gespeichert werden. Im Standortverzeichnis werden alle Informationen über Mobilfunkteilnehmer gespeichert, die einem bestimmten stationären Bereich zuzuordnen sind. Diese Teilnehmerdaten dienen unter anderem dem Verbindungsaufbau und der Dienstführung. Im Besucherverzeichnis sind Daten gespeichert, welche für Gesprächsverbindungen relevant sind. Die Besucherdatei enthält somit Daten über angemeldete mobile Endgeräte und deren Nutzer.

Vorzugsweise umfasst die erfindungsgegenständliche LBS-Weiterverarbeitungsdistanz (WVI) einen LBS-Server zur Interpretation und Ausführung der Informationsanfrage des Nutzers, wobei der LBS-Server mit einer die aktuellen ortsabhängigen Informationen enthaltenen Datenbank in Verbindung steht. Durch diese Architektur ist es beispielsweise in vorteilhafterweise auch möglich, dass eine LBS-Weiterverarbeitungsinstanz von mehreren Netzwerkbetreibern genutzt werden kann. Eine insoweit zentrale LBS-Weiterverarbeitungsinstanz ist zu diesem Zwecke an einen oder mehrere USSD-Handler eines Netzwerkbetreibers anzukoppeln, beispielsweise im Bereich der Mobilfunkvermittlungsstelle (MSC).

Die Klasse von in Mobilfunknetzen eines Netzwerkbetreibers definierten - und insoweit reservierten USSD - für ortsbasierte Dienste kann beispielsweise zur Bezeichnung mindestens eines der nachfolgend aufgeführten ortsbasierten Dienste dienen:
- Information über verfügbare ortsbasierte Informationen (Inhaltsverzeichnis)
- nächstgelegene Hotels
- nächstgelegene Tankstellen
- nächstgelegene Touristeninformationen
- Verkehrs-/Stauinformationen
- nächstgelegene aktuelle öffentliche Veranstaltungen

Ein weiterer Vorteil der erfindungsgemäßen Lösung resultiert aus der Tatsache, dass ein vom Nutzer favorisierter USSD-Code für einen bestimmten, von ihnen oft benutzten ortsbasierten Dienst auf einer bestimmten Kurzwahltaste des mobilen Endgeräts hinterlegbar ist. Hierüber ist der favorisierte USSD-Code durch einen einmaligen Tastendruck am mobilen Endgerät aktivierbar und dem Nutzer steht besonders zügig die von ihm angefragte Information zur Verfügung.

Daneben ist es auch möglich, dass die vom Nutzer favorisierte USSD-Codes für ortsbasierte Dienste im Telefonbuch des mobilen Endgeräts hinterlegt werden. Insbesondere für den Fall, dass viele USSD-Codes von einem Nutzer von Interesse sind, bietet sich diese alternative Variante an.

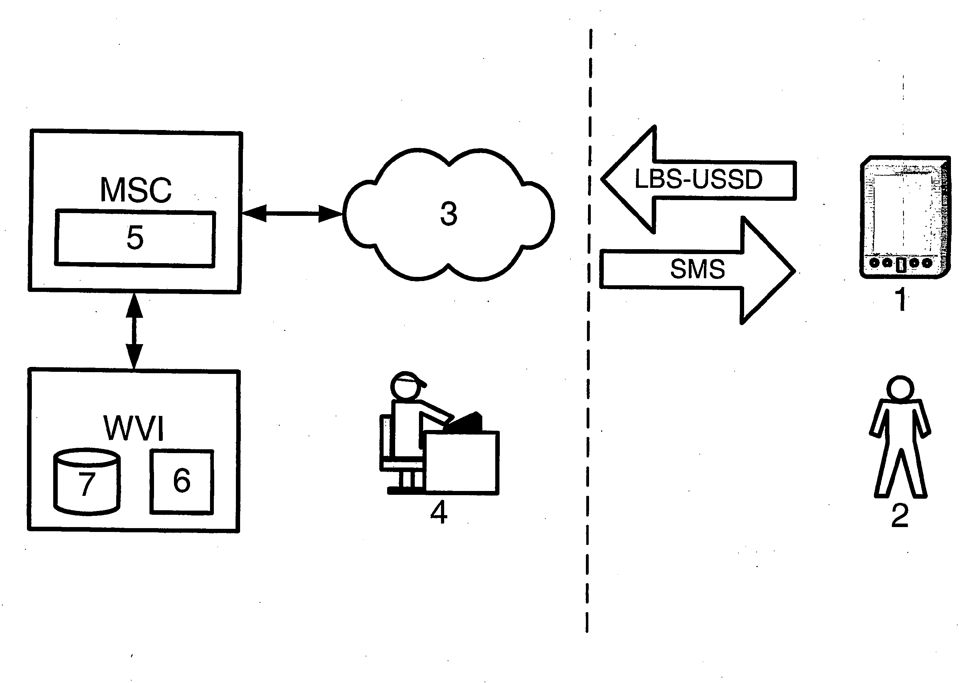

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt ein schematisches Blockschaltbild eines Systems zur Nutzung von ortsbasierten Diensten für mobile Endgeräte.

Gemäß Figur wird zur Nutzung eines ortsbasierten Dienstes über das mobile Endgerät 1 eines Nutzers 2 eine Informationsanfrage nach einer auf dem Aufenthaltsort des Nutzers 2 abgestimmten Information - hier "nächstgelegener Geldautomat" - über ein Mobilfunknetz 3 abgesetzt. Der Nutzer 2 nutzt hierfür einen USSD-Code, der in einer Klasse von im Mobilfunknetz 3 vom Netzwerkbetreiber 4 reservierten USSD-Codes für ortsbasierte Dienste reserviert ist, nachfolgend LBS-USSD genannt. Im hier genannten Beispiel steht die Abfrage einer Information nach "näclistgelegener" Geldautomat dem LBS-USSD "#440#". Hierbei stehen die ersten Ziffern "44" für die Art des angefragten ortsbasierten Dienstes, nämlich "nächstgelegener Geldautomat", wogegen die letzte Ziffer "0" angibt, dass die abgefragte ortsbasierte Information seitens des Netzwerkbetreibers 4 textlich aufbereitet und per SMS an die Adresse des Nutzers 2, also dessen mobilen Endgeräts 1, gesendet werden soll. Die Adresse des abfragenden Nutzers 2 wird im Zuge der Anfrage über die Mobile Subscriber Number (MSISDN) des mobilen Endgeräts 1 transportiert, worüber auch der aktuelle Aufenthaltsort des mobilen Endgeräts 1 ermittelbar ist. Somit verfügt der Netzwerkbetreiber 4 über alle Informationen zur automatischen Bearbeitung der Informationsanfrage des Nutzers 2.

Seitens des Netzwerksbetreibers 4 geht die Informationsanfrage des Nutzers 2 in die Mobilfunkvermittlungsstelle MSC ein. Hierin ist ein USSD-Handler 5 integriert, welcher den eingehenden LBS-USSD-Code als Informationsanfrage für einen ortsbasierten Dienst erkennt und die Abfrage an die hierfür geschaffene LBS-Weiterverarbeitungsinstanz WVI weiterleitet. Die WVI umfasst einen LBS-Server 6, an welchem einen Datenbank 7 angeschlossen ist. Der LBS-Server 6 dient der Interpretation und Ausführung der Informationsanfrage "nächstgelegener Geldautomat" des Nutzers 2. In der angeschlossenen Datenbank 7 sind aufenthaltsortsabhängige und in Dienstklassen gestaffelte Informationen datensatzmäßig gespeichert. So sind hierin Informationen über Standorte von Geldautomaten in den Funkzellen des Mobilfunknetzes 3 hinterlegt. Der LBS-Server 6 selektiert entsprechend der Informationsanfrage "nächstgelegener Geldautomat" also eine kurze Wegbeschreibung eines Geldautomats, welche sich in der aktuellen Funkzelle des mobilen Endgeräts 1 befindet, aus der Datenbank. Die so selektierte Information wird an die Mobilfunkvermittlungsstelle MSC weitergeleitet, hierin textlich als SMS aufbereitet und an das mobile Endgerät 1 des Nutzers 2 als Antwort auf seine Informationsanfrage übertragen.

Die vorliegende Erfindung ist nicht beschränkt auf das vorstehend beschriebene Ausführungsbeispiel. Es sind vielmehr auch Abwandlungen hiervon denkbar, welche vom Schutzumfang der nachfolgenden Ansprüche umfasst sind. So braucht die Lokalisierung des mobilen Endgeräts 1 nicht zwangsläufig über die MSISDN des mobilen Endgeräts 1 erfolgen. Es ist vielmehr auch denkbar, dass ein GPSfähiges mobiles Endgerät benutzt wird. Hiermit ist eine weitaus genauere Bestimmung des aktuellen Aufenthaltsorts des Nutzers 2 möglich, was die Qualität des ortsbasierten Dienstes entsprechend erhöht. Die erfindungsgemäße Lösung ist weiterhin auch offen für alle möglichen, bereits bekannten und zukünftig entwickelten ortsbasierten Dienste der hier interessierenden Art.

### Bezugszeichenliste:

- **1**: mobiles Endgerät
- **2**: Nutzer
- **3**: Mobilfunknetz
- **4**: Netzwerkbetreiber
- **5**: USSD-Handler
- **6**: LBS-Server
- **7**: Datenbank

## Patentansprüche

1. Verfahren zur Nutzung von ortsbasierten Diensten (LBS) für mobile Endgeräte (1) eines Mobilfunknetzes (3), wobei über das mobile Endgerät (1) eine Informationsanfrage nach einer auf den Aufenthaltsort des Nutzers (2) abgestimmten Information abgesetzt wird, wobei die Informationsanfrage als ein USSD-Code abgesetzt wird, der einer Klasse von im Mobilfunknetz (3) definierten USSD-Codes für ortsbasierte Dienste (LBS-USSD) angehört,
**dadurch gekennzeichnet, dass** durch einen USSD-Handler (5) des Netzwerkbetreibers (4) der eingehende USSD-Code für ortsbasierte Dienste (LBS-USSD) identifiziert und gemeinsam mit der Adresse des abfragenden Nutzers (2) an eine LBS-Weiterverarbeitungsinstanz (WVI) weitergeleitet wird, durch welche der USSD-Code für ortsbasierte Dienste (LBS-USSD) anhand der Parametrisierung interpretiert wird und die hierzu passende ortsbasierten Information zum Versenden an den Nutzer (2) bereitgestellt wird, wonach die abgefragte ortsbasierte Information graphisch aufbereitet wird und per SMS/MMS an die Adresse des Nutzers (2) versendet wird oder wonach die abgefragte ortsbasierte Information akustisch aufbereitet wird und per Sprachanruf an die Adresse des Nutzers (2) versendet wird.

2. Verfahren nach Anspruch 1,
**dadurch gekennzeichnet, dass** als Adresse des abfragenden Nutzers (2) die Mobile Subscriber Number (MSISDN) des mobilen Endgeräts (1) genutzt wird, worüber der aktuelle Aufenthaltsort des mobilen Endgeräts (1) ermittelt wird.

3. System zur Nutzung von ortsbasierten Diensten (LBS) für mobile Endgeräte (1) eines Mobilfunknetzes (3), wobei ein Nutzer (2) über das mobile Endgerät (1) eine Informationsanfrage nach einer auf den Aufenthaltsort des Nutzers (2) abgestimmten Information absetzt, wobei der Nutzer (2) die Informationsanfrage als einen USSD-Code absetzt, der einer Klasse von im Mobilfunknetz (3) definierten USSD-Codes für ortsbasierte Dienste (LBS-USSD) angehört,
**dadurch gekennzeichnet, dass** ein USSD-Handler (5) des Netzwerkbetreibers (4) den eingehenden USSD-Code für ortsbasierte Dienste (LBS-USSD) identifiziert und gemeinsam mit der Adresse des abfragenden Nutzers (2) an eine LSB-Weiterverarbeitungsinstanz (WVI) weiterleitet, welche der USSD-Code für ortsbasierte Dienste (LBS-USSD) anhand der Parametrisierung interpretiert und die hierzu passende ortsbasierte Information zum Versenden an den Nutzer (2) bereitstellt, um die abgefragte ortsbasierte Information graphisch oder akustisch aufbereitet und per SMS/MMS bxw. per Sprachanruf an die Adresse des Nutzers zu versenden.

4. System nach Anspruch 3,
**dadurch gekennzeichnet, dass** der USSD-Handler (5) des Netzwerkbetreibers (4) in eine Mobilfunkvermittlungsstelle (MSC), ein Besucherverzeichnis (VLR) oder ein Standortverzeichnis (HLR) des nach dem GSM/3GPP-Standard aufgebauten Mobilfunknetzes (3) integriert ist.

5. System nach Anspruch 3,
**dadurch gekennzeichnet, dass** die LBS-Weiterverarbeitungsinstanz (WVI) einen LSB-Server (6) zur Interpretation und Ausführung der Informationsanfrage des Nutzers (2) umfasst, wobei der LSB-Server (6) mit einer die aktuellen ortsabhängigen Informationen enthaltenden Datenbank (7) in Verbindung steht.

6. System nach Anspruch 3,
**dadurch gekennzeichnet, dass** die Klasse von im Mobilfunknetz (3) definierten USSD-Codes für ortsbasierte Dienste (LSS-USSD) mindestens einen der nachfolgend aufgeführten ortsbasierten Dienste kennzeichnet: "Information über verfügbare ortsbasierte Informationen", "nächstgelegene Hotels", "nächstgelegene Tankstellen", "nächstgelegene Touristeninformationen", "Verkehrs/Stau-Informationen", "nächstgelegene aktuelle öffentliche Veranstaltungen".

7. System nach Anspruch 3,
**dadurch gekennzeichnet, dass** zur Auswahl einer graphischen oder akustischen Aufbereitung der abgefragten ortsbasierten Information für den Nutzer (2) der USSD-Code für ortsbasierte Dienste (LBS-USSD) einen entsprechenden, vom Nutzer (2) wählbaren Parameter umfasst.

8. System nach Anspruch 3,
**dadurch gekennzeichnet, dass** zur Auswahl eines einmaligen oder mehrmaligen Empfangswunsches der ortsbasierten Information der USSD-Code für ortsbasierte Dienste (LBS-USSD) einen entsprechenden, durch den Nutzer (2) eingebbaren Parameter umfaßt.

9. System nach Anspruch 3,
**dadurch gekennzeichnet, dass** ein vom Nutzer (2) favorisierter USSD-Code für einen ortsbasierten Dienst (LBS-USSD) auf einer bestimmten Kurzwahltaste des mobilen Endgeräts (1) hinterlegbar ist.

10. System nach Anspruch 3,
**dadurch gekennzeichnet, dass** die vom Nutzer (2) favorisierten USSD-Codes für ortsbasierte Dienste (LBS-USSD) im Telefonbuch des mobilen Endgeräts (1) hinterlegbar sind.

## Claims

1. Method for utilizing location-based services (LBS) for mobile terminals (1) of a mobile radio network (3), wherein an information query concerning information tailored to the location of the user (2) is dispatched via the mobile terminal (1), wherein the information query is dispatched as a USSD code that belongs to a class of USSD codes defined in the mobile radio network (3) for location-based services (LBS-USSD),
**characterized in that**, by means of a USSD handler (5) of the network operator (4), the incoming USSD code for location-based services (LBS-USSD) is identified and is forwarded together with the address of the querying user (2) to an LBS further processing entity (WVI), by which the USSD code for location-based services (LBS-USSD) is interpreted using the parameterization and the location-based information pertinent thereto is prepared for transmission to the user (2), after which the queried location-based information is graphically prepared and sent via SMS/MMS to the address of the user (2), or after which the queried location-based information is acoustically prepared and sent via voice call to the address of the user (2).

2. Method according to claim 1,
**characterized in that** the mobile subscriber number (MSISDN) of the mobile terminal (1) is used as the address of the querying user (2) through which the current location of the mobile terminal (1) is determined.

3. System for utilizing location-based services (LBS) for mobile terminals (1) of a mobile radio network (3), wherein a user (2) dispatches an information query concerning information tailored to the location of the user (2) via the mobile terminal (1), wherein the user (2) dispatches the information query as a USSD code that belongs to a class of USSD codes defined in the mobile radio network (3) for location-based services (LBS-USSD),
**characterized in that** a USSD handler (5) of the network operator (4) identifies the incoming USSD code for location-based services (LBS-USSD) and forwards it, together with the address of the querying user (2), to an LBS further processing entity (WVI), which interprets the USSD code for location-based services (LBS-USSD) using the parameterization and prepares the location-based information pertinent thereto for transmission to the user (2), in order to send the queried location-based information, graphically or acoustically prepared, to the address of the user via SMS/MMS or via voice call.

4. System according to claim 3,
**characterized in that** the USSD handler (5) of the network operator (4) is integrated in a mobile switching center (MSC), a visitor location register (VLR), or a home location register (HLR) of the mobile radio network (3) configured in accordance with the GSM/3GPP standard.

5. System according to claim 3,
**characterized in that** the LBS further processing entity (WVI) comprises an LSB server (6) for interpretation and execution of the information query of the user (2), wherein the LSB server (6) stands in connection with a database (7) containing the current location-dependent information.

6. System according to claim 3,
**characterized in that** the class of USSD codes defined in the mobile radio network (3) for location-based services (LBS-USSD) identifies at least one of the location-based services listed below: "information on available location-based information," "nearest hotels," "nearest gas stations," "nearest tourist information facilities," "traffic/congestion information," "nearest current public events."

7. System according to claim 3,
**characterized in that**, for the purpose of selecting a graphical or acoustic preparation of the queried location-based information for the user (2), the USSD code for location-based services (LBS-USSD) comprises a corresponding parameter that is selectable by the user (2).

8. System according to claim 3,
**characterized in that**, for the purpose of selecting a one-time or repeated request to receive the location-based information, the USSD code for location-based services (LBS-USSD) comprises a corresponding parameter that can be entered by the user (2).

9. System according to claim 3,
**characterized in that** a USSD code favored by the user (2) for a location-based service (LBS-USSD) can be stored on a certain speed-dial button of the mobile terminal (1).

10. System according to claim 3,
**characterized in that** the USSD codes favored by the user (2) for location-based services (LBS-USSD) can be stored in the telephone directory of the mobile terminal (1).

## Revendications

1. Procédé d'utilisation de services basés sur la localisation (LBS) pour terminaux mobiles (1) d'un réseau de radiocommunication mobile (3), une requête d'information pertinente pour la localisation de l'usager (2) étant émise par l'intermédiaire du terminal mobile (1), la requête d'information étant émise sous la forme d'un code USSD appartenant à une classe de codes USSD destinés à des services basés sur la localisation (LBS-USSD) et définis dans le réseau de radiocommunication mobile (3),
**caractérisé en ce qu'**un gestionnaire USSD (5) de l'opérateur de réseau, (4) identifie le code USSD pour services basés sur la localisation (LBS-USSD) entrant et le transfèré, accompagné de l'adresse de l'usager requérant (2), à une instance de traitement LBS (WVI) qui interprète le code USSD pour services basés sur la localisation (LBS-USSD) à l'aide du paramétrage et fournit l'information basée sur la localisation appropriée pour être envoyée à l'usager (2), l'information basée sur la localisation faisant l'objet de la requête étant ensuite mise en forme graphiquement et envoyée à l'adresse de l'usager (2) par SMS / MMS ou mise en forme acoustiquement et envoyée à l'adresse de l'usager (2) par appel vocal.

2. Procédé selon la revendication 1, **caractérisé en ce que** le numéro identifiant l'usager mobile (MSISDN) du terminal mobile (1) est utilisé comme adresse de l'usager requérant (2) permettant de déterminer la localisation actuelle du terminal mobile (1).

3. Système d'utilisation de services basés sur la localisation (LBS) pour terminaux mobiles (1) d'un réseau de radiocommunication mobile (3), une requête d'information pertinente pour la localisation de l'usager (2) étant émise par un usager (2) par l'intermédiaire du terminal mobile (1), la requête d'information étant émise par l'usager (2) sous la forme d'un code USSD appartenant à une classe de codes USSD destinés à des services basés sur la localisation (LBS-USSD) et définis dans le réseau de radiocommunication mobile (3),
**caractérisé en ce qu'**un gestionnaire USSD (5) de l'opérateur de réseau (4) identifie le code USSD pour services basés sur la localisation (LBS-USSD) entrant et le transfère, accompagné de l'adresse de l'usager requérant (2), à une instance de traitement LBS (WVI) qui interprète le code USSD pour services basés sur la localisation (LBS-USSD) à l'aide du paramétrage et fournit l'information basée sur la localisation appropriée pour être envoyée à l'usager (2), afin que l'information basée sur la localisation faisant l'objet de la requête soit mise en forme graphiquement et envoyée à l'adresse de l'usager par SMS/MMS ou mise en forme acoustiquement et envoyée à l'adresse de l'usager par appel vocal.

4. Système selon la revendication 3, **caractérisé en ce que** le gestionnaire USSD (5) de l'opérateur de réseau (4) est intégré à un centre de commutation du service mobile (MSC), à un registre des abonnés visiteurs (VLR) ou à un registre de localisation (HLR) du réseau de radiocommunication mobile (3) fonctionnant selon le standard GSM/3GPP.

5. Système selon la revendication 3, **caractérisé en ce que** l'instance de traitement LBS (WVI) comprend un serveur LSB (6) destiné à interpréter et à exécuter la requête d'information de l'usager (2), le serveur LSB (6) étant relié à une base de données (7) contenant les informations actuelles basées sur la localisation.

6. Système selon la revendication 3, **caractérisé en ce que** la classe des codes USSD pour services basés sur la location (LBS-USSD) définis dans le réseau de radiocommunication mobile (3) caractérise au moins un des services basés sur la localisation désignés ci-après : « information relative aux informations basées sur la localisation disponibles », « hôtels les plus proches », « stations-services les plus proches », « informations touristiques les plus proches », « informations circulation/bouchons », « manifestions publiques actuelles les plus proches ».

7. Système selon la revendication 3, **caractérisé en ce que** le code USSD pour services basés sur la localisation (LBS-USSD) comprend un paramètre correspondant, susceptible d'être sélectionné par l'usager (2) pour sélectionner une mise en forme graphique ou acoustique de l'information basée sur la localisation faisant l'objet de la requête.

8. Système selon la revendication 3, **caractérisé en ce que** le code USSD pour services basés sur la localisation (LBS-USSD) comprend un paramètre correspondant susceptible d'être entré par l'usager (2) pour sélectionner une demande de réception unique ou multiple de l'information basée sur la localisation.

9. Système selon la revendication 3, **caractérisé en ce qu'**un code USSD favori de l'usager (2) pour un service basé sur la localisation (LBS-USSD) peut être attribué à une touche de composition rapide définie du terminal mobile (1).

10. Système selon la revendication 3, **caractérisé en ce que** les codes USSD favoris de l'usager (2) pour les services basés sur la localisation (LBS-USSD) peuvent être mémorisés dans le répertoire téléphonique du terminal mobile (1).
